(19) **Europäisches Patentamt**
**European Patent Office**
**Office européen des brevets**

(11) **EP 2 936 913 B1**

(12) **EUROPEAN PATENT SPECIFICATION**

(45) Date of publication and mention
of the grant of the patent:
**06.09.2017 Bulletin 2017/36**

(51) Int Cl.:
***H04L 5/00*** *(2006.01)*     *H04W 24/02* *(2009.01)*
***H04W 72/00*** *(2009.01)*     *H04W 28/06* *(2009.01)*

(21) Application number: **13864717.7**

(22) Date of filing: **20.12.2013**

(86) International application number:
**PCT/CN2013/090056**

(87) International publication number:
**WO 2014/094646 (26.06.2014 Gazette 2014/26)**

(54) **METHODS AND NETWORK COMPONENTS FOR ALMOST BLANK SUBFRAME (ABS) DENSITY AND RANGE EXTENSION OPTIMIZATION IN HETEROGENEOUS NETWORKS**

VERFAHREN UND NETZWERKKOMPONENTEN ZUR OPTIMIERUNG DER DICHTE FAST LEERER SUBRAHMEN UND DER BEREICHSERWEITERUNG IN HETEROGENEN NETZWERKEN

PROCÉDÉS ET COMPOSANTS DE RÉSEAU D'OPTIMISATION D'EXTENSION DE PLAGE ET DENSITÉ DE SOUS-TRAME PRESQUE VIDES (ABS) DANS DES RÉSEAUX HÉTÉROGÈNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2012 US 201261740275 P**
**19.12.2013 US 201314135140**

(43) Date of publication of application:
**28.10.2015 Bulletin 2015/44**

(73) Proprietor: **Huawei Technologies Co., Ltd.**
**Longgang District**
**Shenzhen, Guangdong 518129 (CN)**

(72) Inventors:
• **BAGHERI, Hossein**
**518129 Shenzhen**
**Guangdong (CN)**
• **ZHANG, Peng**
**Shanghai 201206 (CN)**
• **COZZO, Carmela**
**San Diego, California 92130 (US)**

(74) Representative: **Epping - Hermann - Fischer**
**Patentanwaltsgesellschaft mbH**
**Schloßschmidstraße 5**
**80639 München (DE)**

**CN-A- 102 761 973    US-A1- 2012 282 864**

• **RENESAS MOBILE EUROPE LTD: "Further considerations on enhancement of ABS resource status", 3GPP DRAFT; R1-123577, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, China; 20120813 - 20120817 5 August 2012 (2012-08-05), XP050661455, Retrieved from the Internet: URL:http://www.3gpp.org/ftp/tsg_ran/WG1_RL 1/TSGR1_70/Docs/ [retrieved on 2012-08-05]**
• **ALCATEL-LUCENT SHANGHAI BELL ET AL: "Almost Blank Subframe Request from Pico to Macro eNB", 3GPP DRAFT; R3-103336, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jacksonville, USA; 20101115, 8 November 2010 (2010-11-08), XP050466332, [retrieved on 2010-11-08]**

(56) References cited:
**CN-A- 102 368 861    CN-A- 102 761 891**

**(Cont. next page)**

• PANASONIC: "Performance Evaluation of Cell Range Expansion in Combination with ABS Ratio Optimization", 3GPP DRAFT; R1-113118, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Zhuhai; 20111010, 7 October 2011 (2011-10-07), XP050538609, [retrieved on 2011-10-07]

2

**Description**

TECHNICAL FIELD

The present invention relates to the field of wireless communications, and, in particular embodiments, to system and methods for Almost Blank Subframe (ABS) density and range extension optimization in heterogeneous networks.

BACKGROUND

RENESAS MOBILE EUROPE LTD: "Further considerations on enhancement of ABS resource status", 3GPP DRAFT; R1-123577, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Qingdao, China; 20120813 - 20120817 5 August 2012 (2012-08-05), XP050661455 relates to an analysis of DL ABS status report for Rel-11 feICIC. Based on the analysis, it is proposed that RAN1 should consider signaling additional message feedback along with the DL ABS status to facilitate the macro eNB on determining the appropriate ABS as well as LP-ABS pattern from the view of overall system; and that the pico eNB should report the information of the average buffered traffic to be transmitted related with QCI for the classified UE according to predefined rule, so that macro integrate these addressed factors along with the local information to determine whether to allocate more ABSs or LP-ABS.

Mobile data traffic is growing quickly and is expected to continue to grow due to the increasing penetration of smart phones and the increasing use of data and video services. Heterogeneous Networks (HetNets) are considered as a promising technology to meet the requirements in an efficient way and with a relatively low cost. A HetNet is a mixed deployment of macro cells and small cells. A small cell is also called a Low Power Node (LPN), and its use can be effective to quickly increase the capacity and coverage area of the network. In HetNet, the transmit power of the macro cell is typically higher than that of the small cell. When the cells are deployed on the same frequency, which is the co-channel scenario, typically one or more small cells are allowed to serve a user equipment (UE) if the small cells' signals at the UE have higher power than that of the macro cell. The coverage of the small cells can be extended by allowing the small cells to serve the UE even if the small cells' signals at the UE have less power than the macro cell's signal. However, this also causes interference on downlinks at the UE. Time slots can be allocated to restrict downlink transmissions from the macro cell and hence allow the UE s to receive on downlinks from the small cells with less or no interference. However, there is a need for an efficient scheme for selecting an appropriate number of time slots of restricted transmissions from the macro cell and providing suitable coverage range for the small cells while saving network resources.

SUMMARY OF THE INVENTION

In accordance with an embodiment of the disclosure, a method by a network component in a small cell for determining Almost Blank Subframe (ABS) density and range extension value for small cells in a wireless network includes transmitting a pilot signal in the small cell, and determining downlink load (DLL) information according to a pair of measurements from each user equipment (UE) served by the small cell. The pair of measurements includes a first measurement of the pilot signal and a second measurement of a second pilot signal from a macro cell. The macro cell has a higher transmission power than the small cell. The method further includes determining a number of ABSs according to the DLL information, and reporting the DLL information and the number of ABSs to a network entity for selecting ABS density and range extension value for the small cell and the macro cell.

In accordance with another embodiment of the disclosure, a network component in a small cell for determining ABS density and range extension value for small cells in a wireless network includes at least one processor and a non-transitory computer readable storage medium storing programming for execution by the processor. The programming includes instructions to transmit a pilot signal in the small cell, and receive a pair of measurements from each UE served by the small cell. The pair of measurements includes a first measurement of the pilot signal and a second measurement of a second pilot signal from a macro cell. The macro cell has a higher transmission power than the small cell. The programming further includes instructions to determine DLL information according to the first measurement and the second measurement from each UE served by the small cell, and determine a number of ABSs according to the DLL information. The network component is further configured to report the DLL information and the number of ABSs to a network entity for selecting ABS density and range extension value for the small cell and the macro cell.

In accordance with another embodiment of the disclosure, a method by a network component in a macro cell for determining ABS density and range extension for small cells in a wireless network includes transmitting a pilot signal in the macro cell, and determining, for each small cell, DLL information according to receiving a pair of measurements from each UE served by each small cell considered in the wireless network. The pair of measurements includes a first measurement of the pilot signal and a second measurement of a second pilot signal from a small cell. The small cell has a lower transmission power than the macro cell. The method further includes determining, for each small cell, a number of ABSs according to the DLL information, and reporting the DLL information and the number of ABSs for each small cell to a network entity for selecting ABS density and range extension value for each small cell and the macro cell. In accordance with yet another embodiment of the disclosure, a network component in a macro cell for determining ABS density and range extension value for small cells in a wireless network includes at least one processor and a non-transitory computer readable storage medium storing programming for execution by the processor. The programming includes instructions to transmit a pilot signal in the macro cell, and receive a pair of measurements from each UE served by each small cell considered in the wireless network. The pair of measurements includes a first measurement of the pilot signal and a second measurement of a second pilot signal from a small cell. The small cell has a lower transmission power than the macro cell. The programming includes further instructions to determine, for each small cell, DLL information according to the first measurement and the second measurement from each UE served by the small cell, and determine, for each small cell, a number of ABSs according to the DLL information. The network component is further configured to report the DLL information and the number of ABSs for each small cell to a network entity for selecting ABS density and range extension value for each small cell and the macro cell.

The foregoing has outlined rather broadly the features of an embodiment of the present invention in order that the detailed description of the invention that follows may be better understood. Additional features and advantages of embodiments of the invention will be described hereinafter, which form the subject of the claims of the invention. It should be appreciated by those skilled in the art that the conception and specific embodiments disclosed may be readily utilized as a basis for modifying or designing other structures or processes for carrying out the same purposes of the present invention.

BRIEF DESCRIPTION OF THE DRAWINGS

For a more complete understanding of the present invention, and the advantages thereof, reference is now made to the following descriptions taken in conjunction with the accompanying drawing, in which:

Figure 1 illustrates a scenario of a heterogeneous network;

Figure 2 illustrates an embodiment of a scheme for Almost Blank Subframe (ABS) density and Range Extension (RE) optimization in heterogeneous networks;

Figure 3 illustrates an embodiment of a method for ABS density and RE optimization in heterogeneous networks; and

Figure 4 is a diagram of a processing system that can be used to implement various embodiments.

Corresponding numerals and symbols in the different figures generally refer to corresponding parts unless otherwise indicated. The figures are drawn to clearly illustrate the relevant aspects of the embodiments and are not necessarily drawn to scale.

DETAILED DESCRIPTION OF ILLUSTRATIVE EMBODIMENTS

The operation and structure of the presently preferred embodiments are discussed in detail below. It should be appreciated, however, that the present invention provides many applicable inventive concepts that can be embodied in a wide variety of specific contexts. The specific embodiments discussed are merely illustrative of specific structures and methods of the invention, and do not limit the scope of the invention.

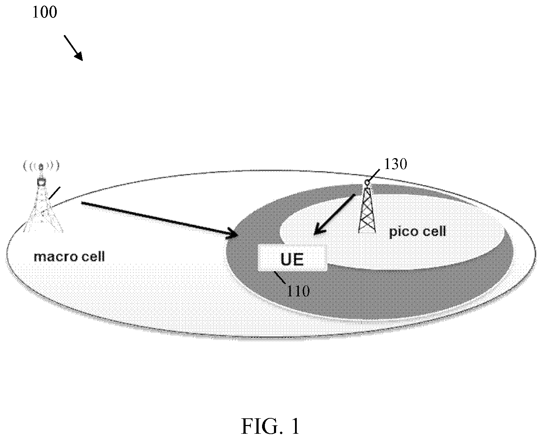

Figure 1 illustrates a scenario of a heterogeneous network 100 where a UE 110 is served by two cells, a serving cell 120 and an assisting serving cell 130. The UE 110 can be a smartphone or any mobile user communications device. For instance, the serving cell 120 is a macro cell such as a NodeB, and the assisting serving cell 130 is a small or pico cell which is a radio node that has lower transmission power than the NodeB. The terms small cell and pico cell are used herein interchangeably to refer to low power radio nodes in comparison to the macro cell.

Range Extension (RE) is a technique to extend the coverage of the small cell in heterogeneous networks. In typical operations, a UE is served by the small cell only when the signal strength from the small cell received at the UE is larger than that from the macro cell. In RE operation, however, a UE can be served by the small cell even when the signal strength from the small cell received at the UE is smaller than that from the macro cell. Such RE UEs served by the small cell, however, can suffer from strong downlink interference due to the macro cell.

Almost blank subframe (ABS) operation can be used to reduce the downlink interference. A periodical pattern indicating ABSs (where transmission of the macro cell are restricted) and non-ABSs (where the macro cell transmissions are not restricted) is defined by the network. During ABSs, the macro cell restricts its data transmission to the UEs served by the macro. This results in reduced macro downlink interference to a UE served by the small cell with RE. The RE UE can be served by the small cell during ABSs. During non-ABSs, the macro cell has no restriction on its data transmission to the UE, and the small cell would only serve a non-RE UE. An example of an ABS pattern is 000111111, where '0' indicates an ABS while '1' indicates a non-ABS. For the first 3 subframes, the macro cell restricts its data transmission while for the last 5 subframes the macro cell resumes its data transmission.

Embodiments are provided herein for optimizing the ABS pattern in heterogeneous network (HetNet) deployments with multiple small or pico cells, e.g., inside a macro cell coverage. There is one ABS pattern used for all small cells while the small cells' load may be different. Different small cells may have different downlink loads, e.g., due to the difference in number of UEs or applications. There may be scenarios where a lightly loaded small cell receives a larger number of ABSs than what it needs. For example, a first small cell requires 3 ABSs and a second small cell requires 1 ABS. The network may assign 3 ABSs to satisfy the requested load from the first small cell, or 2 ABSs to make a compromise between the requests. However, the second small cell may find even the 2 ABSs more than what it needs due to its low load. The chosen number of ABSs for all small cells is referred to herein as ABS density.

In an embodiment, a radio network controller (RNC) is an entity of the network responsible for ABS density determination. If the RNC has more knowledge than aggregate downlink (DL) load information for each small cell, the RNC may be able to assign a better ABS density (a more suitable or optimal number of ABSs) considering requirement of all or multiple small cells and assign a better Cell RE (CRE) value for each small cell. The CRE reflects cell's coverage in accordance with RE operation. The CRE can be a cell-specific offset applied to UE measurements to enlarge the cell's coverage area. To make such ABS and CRE determinations, additional information is provided to the RNC, including multiple DL load (DLL) information corresponding to UEs present in potential RE areas of each small cell and corresponding recommended number of ABSs. The RNC uses this information to assign a better optimized ABS pattern to all small cells and a proper CRE value for each small cell.

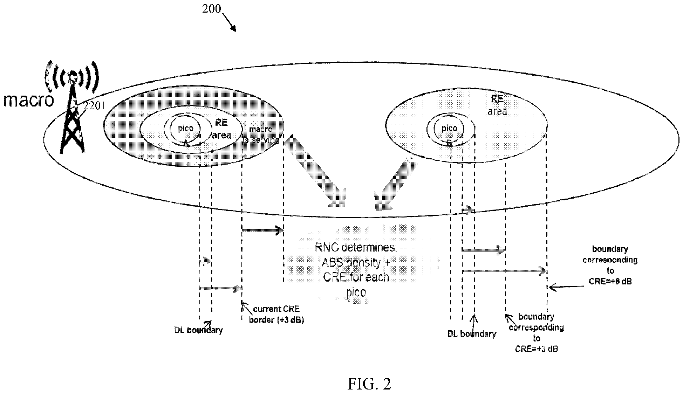

Figure 2 shows an embodiment of a scheme 200 for ABS density and RE optimization than can be implemented for HetNets. According to the scheme 200, the RNC provides each considered pico cell with a set of possible or potential CRE values (referred to as a CRE set). An example of the CRE set is {-3, 0, 3, 6} in dBs. The CRE set can be different for different small or pico cells. For example, the pico cells closer to the macro cell base station 220, such as pico cell A, may have a different CRE set than pico cells that are farther from the macro base station 220, such as pico cell B. Alternatively, at least some of the pico cells may have the same CRE set.

In an embodiment, the RNC can trigger, e.g., using radio resource control (RRC) signaling, measurements at the cells for the purpose of determining ABS density. Thus, each small cell transmits a common pilot channel (CPICH) with a specified power, e.g., upon receiving the RRC signaling. Small cells closer to the macro cell may optionally transmit an additional pilot channel to CPICH to accommodate more pilot power to report measurements corresponding to larger CREs. The macro cell also transmits its CPICH for this purpose. For example, the measurements can be triggered by the RNC when a small cell signals the RNC to indicate that the small cell's DLL has changed (e.g., beyond a fluctuation threshold). Other measurement triggering mechanisms may also apply.

Each UE measures the macro CPICH power (referred to herein as macro CPICH EcNo) and the small or pico CPICH power of its small or pico cell (referred to herein as small cell CPICH EcNo), and reports this measurements pair (MP) to its serving cell/radio node (pico or macro). In an embodiment, each UE sends the MP to its serving cell. The ID of the non-serving cell can be included in the report to the serving cell. The reporting can be done using higher layer signaling. In another embodiment, the reporting is done using physical layer signaling. For instance, the Channel Quality Indication (CQI) field in the high speed dedicated physical control channel (HS-DPCCH) can be used for this report. The dual-cell (DC) CQI format can be reused in a reporting period to send the MP to the serving cell. The DC CQI format carries the CQI for the serving cell and non-serving cell of the UE. The UE can repeat the transmission of the CQI report containing the CPICH power for the serving cell over the next defined number (as indicated by a parameter N_MP_transmit) of consecutive HS-DPCCH subframes in the slots respectively allocated to the CQI. The UE can also transmit the CQI for the other cell involved in the MP over the next defined number of consecutive HS-DPCCH subframes immediately following the transmission of the CQI report containing the CPICH power for the serving cell. The parameter N_MP_transmit and the power of the HS-DPCCH can be set to ensure the reliability of the report. To transmit the ID of the non-serving cell to the serving cell, the unused Precoding Matrix Indicator (PMI)/Rank Indicator (RI) field bits (e.g., 64 IDs can be supported with 4-branch multiple-input and multiple-output (MIMO) report) in the dual-cell CQI report can be reused even if the UE is not configured in the MIMO mode. This special dual-cell CQI report can be reused for the purpose of the MP report. The hybrid automatic repeat request (HARQ) field of HS-DPCCH can also be used if more than 64 IDs have to be supported.

After receiving the MP from a UE, the small or pico cell reports to the RNC a number of recommended ABSs (for restricting macro cell transmission) for each CRE value in the CRE set of that small or pico cell. The CRE values in the CRE set represent potential RE coverage areas for the cell. These potential values are referred to herein as hypothetical CRE (HCRE) values. The small or pico cell also reports to the RNC DLL information corresponding to UEs present in these potential RE areas of the small or pico cell. The DLL includes load information for the UEs in each of the CRE values of the CRE set of that small or pico cell. The macro cell also reports to the RNC a number of recommended ABSs (for restricting macro cell transmission) for each CRE value in the CRE set of the macro cell. The macro cell also reports to the RNC DLL information indicating load information for the UEs in each of the CRE values of the CRE set of the macro cell.

In an embodiment, each i-th small cell with a current CRE of $y_i$ (e.g., 3 dB for a small cell) can perform the following calculations knowing the DLL of the UEs which reported their measurements. The small cell obtains the j-th UE's RE value by $URE_j$ = macro CPICH EcNo - small cell CPICH EcNo. For each element of CRE-Set x, with x≤$y_i$ it obtains the small cell's recommended ABS $\left(P\_ABS_i^x\right)$ density associated to the HCRE value "x" as follows:

$$MP_i^{(x)} = \bigcup_{\forall j\,where\text{-}3\leq URE_j\leq x} MP_j, \qquad DLL_i^{(x)} = \bigcup_{\forall j\,where-3\leq URE_j\leq x} DLL_j, P_{ABS_i^x} =$$

$$ABSCal\left(MP_i^{(x)}, DLL_i^{(x)}\right). \text{ An example of ABSCal function can be } ABSCal\left(MP_i^{(x)}, DLL_i^{(x)}\right) =$$

$$\sum_j \frac{DLL\_j}{C(\text{small cell CPICH EcNo}_j)},$$ where C(.) is a rate function like C(x) = a log(1 + $bx$), where a and b are constants.

The i-th small cell sends a signal to RNC containing the DLL and the number of the required ABSs corresponding to the different HCRE values in the set that are ≤ $y_i$. For HCRE=r1, DLL_i= L1, S1 is the number of ABSs required. The DLL_i can be the number of UEs and/or the aggregate DLL in the corresponding HCRE area. For HCRE=r2, DLL_i= L2, S2 is the number of ABSs required. The same logic is used for any additional HCREs. Sending the DLL_i to RNC is useful since RNC can weigh the ABS density recommendations considering the DLLs sent by small cells.

The macro cell needs to know the CRE-Set for each small cell and the current CRE of each small cell. For each small cell i, the macro cell sends a signal to RNC containing the following information for each HCRE value x>$y_i$. For HCRE=x, DLL for small cell i UEs within $y_i$≤HCRE≤x is Lx, Sx is the number of ABSs required. The macro cell then sends its aggregate DLL to RNC. The RNC then processes all the small and macro cells' reports and decides on the ABS pattern for all cells and on the CRE value for each small cell

For example, Figure 2 shows different HCRE areas indicated by arrows. In Figure 2, pico cell A has only one CRE value of 3 dB, and pico cell B has only one CRE value of 6 dB. Pico cell A reports to the RNC the following for the default HCRE of 0 dB: X1 amount of load for the UEs within the boundary of the 0 dB HCRE around pico cell A, and a recommended number of 1 ABS for this CRE. Pico cell A also reports for the HCRE of 3 dB: X1 and X2 amounts of load for the UEs within the boundary of the 3 dB HCRE around pico cell A, and a recommended number of 2 ABSs for this CRE. Since the 3 dB HCRE is larger than and includes the 0 dB HCRE, the load of the 3 dB HCRE is larger and hence the recommended number of ABSs can be larger. Pico cell B also reports to the RNC similar information according to the same logic. The macro cell reports to the RNC for each of the pico cells, a recommended number of ABSs for each HCRE value in the CRE set of the macro cell. For example, for pico cell A< the macro cell reports for HCRE of 6 dB: X3 amount of load of UEs for the UEs within the boundary of the 6 dB HCRE around pico cell A, and a recommended number of 1 ABS for this CRE.

In another example, each of pico cell A and pico cell B has the CRE set {-3., 0, 3}. Pico cell A reports the following: HCRE=-3dB requires 1 ABS, HCRE=0 dB requires 2 ABSs, and HCRE=3 dB requires 2 ABSs. Pico cell B reports the following: HCRE=-3dB requires 0 ABS, HCRE=0 dB requires 0 ABSs, and HCRE=3 dB requires 1 ABSs. The reports may be sent without explicitly indicating the corresponding UE load. According to these reports, the RNC may assign 1 ABS and CRE=-3 dB for pico cell A, and 1 ABS and CRE=3 dB for small cell B.

In another example, pico cell A reports the following: HCRE=-3dB requires 1 ABS with load LA1, HCRE=0 dB requires 1 ABS with load LA2, and HCRE=3 dB requires 2 ABSs with load LA3. Pico cell B reports the following: HCRE=-3dB requires 1 ABS with load LB1, HCRE=0 dB requires 1 ABS with load LB2, HCRE=3 dB requires 1 ABSs with load LB3, and HCRE=6 dB requires 2 ABSs with load LB4. The macro cell also reports to RNC for pico cell A: HCRE=6 dB requires 1 extra ABS (to the maximum CRE (e.g., 3 dB) report sent by pico cell A) ABS with load LA4. The DLL information is included in these reports. The RNC decides on ABS density and CREs according to the pico cells and macro cell reports.

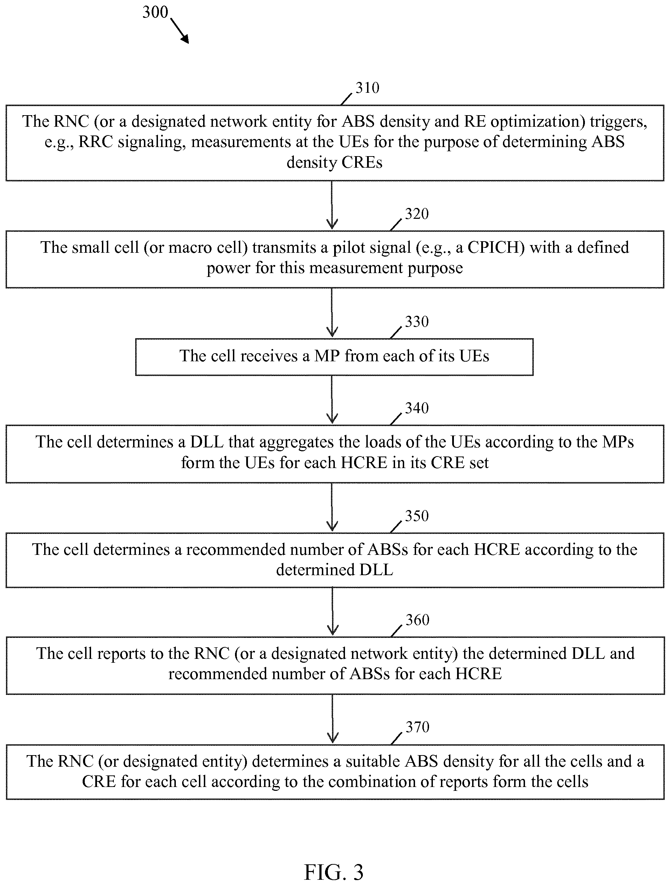

Figure 3 shows a method 300 for ABS density and RE optimization in heterogeneous networks. The method 300 can be implemented at each small cell and the macro cell. At step 310, the RNC (or a designated network entity for ABS density and RE optimization) triggers, e.g., RRC signaling, measurements at the UEs for the purpose of determining ABS density and CREs. This step can be in response to some network event, such as receiving signaling from a small cell about change in DLL. At step 320, the small cell (or macro cell) transmits a pilot signal (e.g., a CPICH) with a defined power for this measurement purpose. At step 330, the cell receives a MP from each of its UEs. At step 340, the cell determines a DLL that aggregates the loads of the UEs according to the MPs form the UEs for each HCRE in its CRE set. At step 350, the cell determines a recommended number of ABSs for each HCRE according to the determined DLL. At step 360, the cell reports to the RNC (or a designated network entity) the determined DLL and recommended number of ABSs for each HCRE. At step 370, the RNC (or designated entity) determines a suitable ABS density for all the cells and a CRE for each cell according to the combination of reports from the cells.

In another embodiment, the UE reports the MP to the RNC directly, e.g., via RRC signaling. Each small cell also reports to the RNC the DLL and the recommended number of ABS for each HCRE. The macro cell also reports the DLL for each small cell (without a recommended number of ABSs). In yet another embodiment, the UE reports the MP to the RNC directly, e.g., via RRC signaling. The RNC hence sends a function of the UE measurement reports to the small cells and macro cell. Each small cell then reports to the RNC the DLL and the recommended number of ABS for each HCRE. The macro cell also reports, for each small cell, the corresponding DLL and recommended number of ABSs

The DL performance of cell-edge UEs belonging to small cells can be improved using a single frequency dual cell (SFDC) operation. SFDC configured UEs can be simultaneously served by two cells on the same frequency: a serving cell and an assisting serving cell. In HetNet deployment, a small cell can be the serving cell and a macro cell can be the assisting serving cell. Assuming the presence of both SFDC configured UEs and non-SFDC UEs, ABS operation may be required as a technology to serve UEs in the RE area. The SFDC configured UEs, if served in non-ABSs, can affect the macro's load and thus can become a factor in ABS density determination. Therefore, optimization of the ABS pattern can benefit from the knowledge of the DLL and the number of recommended ABSs associated with SFDC configured UEs and non-SFDC UEs, within a HCRE area. In an embodiment that considers SFDC and ABS operations, the RNC takes this information into account in ABS density determination. In this case, instead of one DLL and one ABS density recommendation report per small cell per HCRE value, two reports may be sent: one corresponding to the SFDC configured UEs and the other one corresponding to the remaining UEs.

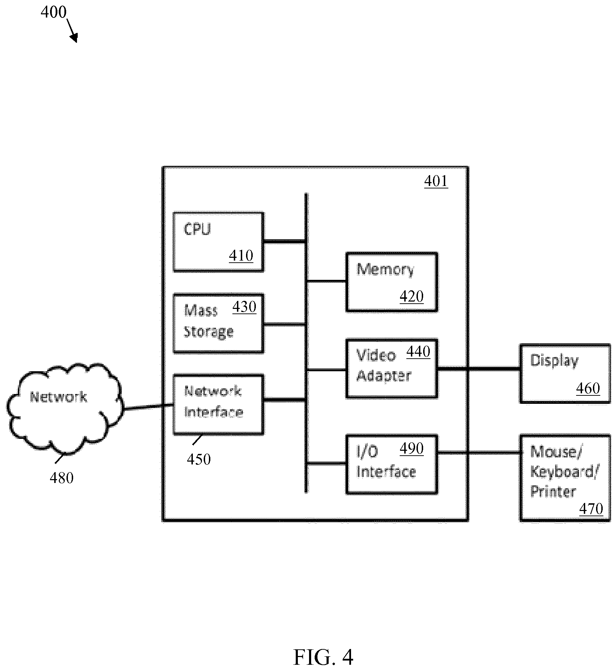

Figure 4 is a block diagram of an exemplary processing system 400 that can be used to implement various embodiments. The processing system is part of a communications system, for example, at a base station or a UE. The processing system 400 may comprise a processing unit 401 equipped with one or more input/output devices, such as a speaker, microphone, mouse, touchscreen, keypad, keyboard, printer, display, and the like. The processing unit 401 may include a central processing unit (CPU) 410, a memory 420, a mass storage device 430, a video adapter 440, and an Input/Output (I/O) interface 490 connected to a bus. The bus may be one or more of any type of several bus architectures including a memory bus or memory controller, a peripheral bus, a video bus, or the like.

The CPU 410 may comprise any type of electronic data processor. The memory 420 may comprise any type of system memory such as static random access memory (SRAM), dynamic random access memory (DRAM), synchronous DRAM (SDRAM), read-only memory (ROM), a combination thereof, or the like. In an embodiment, the memory 420 may include ROM for use at boot-up, and DRAM for program and data storage for use while executing programs. The mass storage device 430 may comprise any type of storage device configured to store data, programs, and other information and to make the data, programs, and other information accessible via the bus. The mass storage device 430 may comprise, for example, one or more of a solid state drive, hard disk drive, a magnetic disk drive, an optical disk drive, or the like.

The video adapter 440 and the I/O interface 490 provide interfaces to couple external input and output devices to the processing unit. As illustrated, examples of input and output devices include a display 460 coupled to the video adapter 440 and any combination of one or more of a mouse/keyboard/printer 470 coupled to the I/O interface 490. Other devices may be coupled to the processing unit 401, and additional or fewer interface cards may be utilized. For example, a serial interface card (not shown) may be used to provide a serial interface for a printer.

The processing unit 401 also includes one or more network interfaces 450, which may comprise wired links, such as an Ethernet cable or the like, and/or wireless links to access nodes or one or more networks 480. The network interface 450 allows the processing unit 401 to communicate with remote units via the networks 480. For example, the network interface 450 may provide wireless communication via one or more transmitters/transmit antennas and one or more receivers/receive antennas. In an embodiment, the processing unit 401 is coupled to a local-area network or a wide-area network for data processing and communications with remote devices, such as other processing units, the Internet, remote storage facilities, or the like.

The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope disclosed herein.

**Claims**

1. A method by a network component in a small cell for determining Almost Blank Subframe, ABS, density and range extension value for small cells in a wireless network, the method comprising:

    transmitting (320) a first pilot signal in the small cell;
    determining downlink load, DLL, information according to a pair of measurements received from each user equipment, UE, served by the small cell, wherein the pair of measurements includes a first measurement of the first pilot signal and a second measurement of a second pilot signal from a macro cell, wherein the macro cell has a higher transmission power than the small cell;
    determining a number of ABSs according to the DLL information; and
    reporting the DLL information and the number of ABSs to a network entity for selecting ABS density and range extension value for the small cell and the macro cell.

2. The method of claim 1 further comprising receiving (330) a function of the pair of measurements from the network entity.

3. The method of claim 1, wherein the DLL information from each UE is an aggregate function of DLL from each UE served by the small cell.

4. The method of claim 1, wherein determining the DLL information according to the first measurement and the second measurement from each UE served by the small cell comprises determining (340) a DLL value for each hypothetical cell range extension, HCRE, value in a set of cell range extension, CRE, values defined by the wireless network for the small cell.

5. The method of claim 4, wherein determining the number of ABSs according to the DLL information comprises determining (350), for each HCRE value, a number of ABSs corresponding to the DLL value.

6. The method of claim 5, wherein reporting the DLL information and the number of ABSs to the network entity comprises reporting (360) the DLL value and the number of ABSs for each HCRE value.

7. The method of claim 1 further comprising receiving from the network entity an ABS pattern for both the small cell and the macro cell and a CRE value for the small cell, wherein the ABS pattern indicates an ABS with restricted transmission of the macro cell, and wherein the ABS pattern and the CRE are according to the DLL information and the number of ABSs requested by multiple cells including the small cell and the macro cell.

8. A network component in a small cell for determining Almost Blank Subframe, ABS, density and range extension value for small cells in a wireless network, the network component comprising:

    at least one processor; and
    a non-transitory computer readable storage medium storing programming for execution by the processor, the programming including instructions to:

        transmit a first pilot signal in the small cell;
        receive a pair of measurements from each user equipment, UE, served by the small cell, wherein the pair of measurements includes a first measurement of the first pilot signal and a second measurement of a second pilot signal from a macro cell, wherein the macro cell has a higher transmission power than the small cell;
        determine downlink load, DLL, information according to the first measurement and the second measurement from each UE served by the small cell;
        determine a number of ABSs according to the DLL information; and
        report the DLL information and the number of ABSs to a network entity for selecting ABS density and range extension value for the small cell and the macro cell.

9. The network component of claim 8, wherein the instructions to determine the DLL information according to the first measurement and the second measurement from each UE served by the small cell include instructions to determine a DLL value for each hypothetical cell range extension, HCRE, value in a set of cell range extension, CRE, values defined by the wireless network for the small cell.

**10.** The network component of claim 9, wherein the instructions to determine the number of ABSs according to the DLL information include instructions to determine, for each HCRE value, a number of ABSs corresponding to the DLL value.

**11.** The network component of claim 10, wherein the instructions to report the DLL information and the number of ABSs to the network entity include instructions to report the DLL value and the number of ABSs for each HCRE value.

**12.** The network component of claim 8, wherein the programming includes further instructions to receive from the network entity an ABS pattern optimized for both the small cell and the macro cell and a CRE optimized individually for the small cell, wherein the ABS pattern indicates an ABS with restricted transmission from the macro cell, and wherein the ABS pattern and the CRE are optimized according to the DLL information and the number of ABSs from multiple cells including the small cell and the macro cell.

**13.** A method by a network component in a macro cell for determining Almost Blank Subframe, ABS, density and range extension for small cells in a wireless network, the method comprising:

transmitting (320) a first pilot signal in the macro cell;
determining, for each small cell, downlink load, DLL, information according to a pair of measurements received from each user equipment, UE, served by each small cell considered in the wireless network, wherein the pair of measurements includes a first measurement of the first pilot signal and a second measurement of a second pilot signal from a small cell, wherein the small cell has a lower transmission power than the macro cell;
determining, for each small cell, a number of ABSs according to the DLL information; and
reporting the DLL information and the number of ABSs for each small cell to a network entity for selecting ABS density and range extension value for each small cell and the macro cell.

**14.** The method of claim 13 further comprising receiving (330) a function of the pair of measurements from the network entity.

**15.** The method of claim 13, wherein determining the DLL information according to the first measurement and the second measurement from each UE served by each small cell comprises determining (340) a DLL value for each hypothetical cell range extension, HCRE, value in a set of cell range extension, CRE, values defined by the wireless network for each small cell.

**16.** The method of claim 15, wherein determining, for each small cell, the number of ABSs according to the DLL information comprises determining (350), for each HCRE value, a number of ABSs corresponding to the DLL value.

**17.** The method of claim 16, wherein reporting the DLL information and the number of ABSs for each small cell to the network entity comprises reporting (360) the DLL value and the number of ABSs for each HCRE value.

**18.** The method of claim 13 further comprising receiving from the network entity an ABS pattern optimized for each small cell and the macro cell, wherein the ABS pattern indicates an ABS with restricted transmission from the macro cell, and wherein the ABS pattern and a CRE for each cell are optimized according to the DLL information and the number of ABSs from multiple cells including the small cell and the macro cell.

**19.** A network component in a macro cell for determining Almost Blank Subframe, ABS, density and range extension value for small cells in a wireless network, the network component comprising:

at least one processor; and
a non-transitory computer readable storage medium storing programming for execution by the processor, the programming including instructions to:

transmit a first pilot signal in the macro cell;
receive a pair of measurements from each user equipment, UE, served by each small cell considered in the wireless network, wherein the pair of measurements includes a first measurement of the first pilot signal and a second measurement of a second pilot signal from a small cell, wherein the small cell has a lower transmission power than the macro cell;
determine, for each small cell, downlink load, DLL, information according to the first measurement and the second measurement from each UE served by the small cell;

determine, for each small cell, a number of ABSs according to the DLL information; and
report the DLL information and the number of ABSs for each small cell to a network entity for selecting ABS density and range extension value for each small cell and the macro cell.

20. The network component of claim 19, wherein the instructions to determine the DLL information according to the first measurement and the second measurement from each UE served by each small cell include instructions to determine a DLL value for each hypothetical cell range extension, HCRE, value in a set of cell range extension, CRE, values defined by the wireless network for each small cell.

21. The network component of claim 20, wherein the instructions to determine, for each small cell, the number of ABSs according to the DLL information include instructions to determine, for each HCRE value, a number of ABSs corresponding to the DLL value.

22. The network component of claim 21, wherein the instructions to report the DLL information and the number of ABSs for each small cell to the network entity include instructions to report the DLL value and the number of ABSs for each HCRE value.

23. The network component of claim 19, wherein the programming further includes instructions to receive from the network entity an ABS pattern optimized for each small cell and the macro cell, wherein the ABS pattern indicates an ABS with restricted transmission from the macro cell, and wherein the ABS pattern and a CRE for each small cell are optimized according to the DLL information and the number of ABSs from multiple cells including the small cell and the macro cell.

**Patentansprüche**

1. Verfahren, das durch eine Netzkomponente in einer kleinen Zelle ausgeführt wird, um die Dichte beinahe leerer Unterrahmen, ABS-Dichte, und den Reichweitenerweiterungswert für kleine Zellen in einem drahtlosen Netz zu bestimmen, wobei das Verfahren Folgendes umfasst:

   Senden (320) eines ersten Pilotsignals in der kleinen Zelle;
   Bestimmen von Abwärtsstreckenlast-Informationen, DLL-Informationen, gemäß einem Paar von Messungen, das von jedem Anwendergerät, UE, das durch die kleine Zelle versorgt wird, empfangen wird, wobei das Paar von Messungen eine erste Messung des ersten Pilotsignals und eine zweite Messung eines zweiten Pilotsignals von einer Makrozelle enthält, wobei die Makrozelle eine höhere Sendeleistung als die kleine Zelle aufweist;
   Bestimmen der Anzahl von ABSs gemäß den DLL-Informationen; und
   Berichten der DLL-Informationen und der Anzahl von ABSs an eine Netzentität zum Auswählen von ABS-Dichte und Reichweitenerweiterungswert für die kleine Zelle und die Makrozelle.

2. Verfahren nach Anspruch 1, das ferner Empfangen (330) einer Funktion des Paars von Messungen von der Netzentität umfasst.

3. Verfahren nach Anspruch 1, wobei die DLL-Informationen von jedem UE eine Aggregatfunktion der DLL von jedem UE ist, das durch die kleine Zelle versorgt wird.

4. Verfahren nach Anspruch 1, wobei das Bestimmen der DLL-Informationen gemäß der ersten Messung und der zweiten Messung von jedem UE, das durch die kleine Zelle versorgt wird, Bestimmen (340) eines DLL-Werts für jeden hypothetischen Zellenreichweitenerweiterungswert, HCRE-Wert, in einer Gruppe von Zellenreichweitenerweiterungswerten, CRE-Werten, ist, die durch das drahtlose Netz für die kleine Zelle definiert sind.

5. Verfahren nach Anspruch 4, wobei das Bestimmen der Anzahl von ABSs gemäß den DLL-Informationen das Bestimmen (350) für jeden HCRE-Wert einer Anzahl von ABSs, die dem DLL-Wert entsprechen, umfasst.

6. Verfahren nach Anspruch 5, wobei das Berichten der DLL-Informationen und der Anspruch von ABSs an die Netzentität das Berichten (360) des DLL-Werts und der Anzahl von ABSs für jeden HCRE-Wert umfasst.

7. Verfahren nach Anspruch 1, das ferner Empfangen von der Netzentität eines ABS-Musters für sowohl die kleine Zelle als auch die Makrozelle und eines CRE-Werts für die kleine Zelle umfasst, wobei das ABS-Muster einen ABS mit eingeschränktem Senden der Makrozelle angibt und wobei das ABS-Muster und die CRE gemäß den DLL-Informationen und der Anzahl von ABSs sind, die durch mehrere Zellen, die die kleine Zelle und die Makrozelle enthalten, angefordert sind.

8. Netzkomponente in einer kleinen Zelle zum Bestimmen der Dichte beinahe leerer Unterrahmen, ABS-Dichte, und des Reichweitenerweiterungswerts für kleine Zellen in einem drahtlosen Netz, wobei die Netzkomponente Folgendes umfasst:

wenigstens einen Prozessor; und
ein nichtflüchtiges computerlesbares Speichermedium, das Programmierung zum Ausführen durch den Prozessor speichert, wobei die Programmierung Anweisungen enthält zum:

Senden eines ersten Pilotsignals in der kleinen Zelle;
Empfangen eines Paars von Messungen von jedem Anwendergerät, UE, das durch die kleine Zelle versorgt wird, wobei das Paar von Messungen eine erste Messung des ersten Pilotsignals und eine zweite Messung eines zweiten Pilotsignals von einer Makrozelle enthält, wobei die Makrozelle eine höhere Sendeleistung als die kleine Zelle aufweist;
Bestimmen von Abwärtsstreckenlast-Informationen, DLL-Informationen, gemäß der ersten Messungen und der zweiten Messung von jedem UE, das durch die kleine Zelle versorgt wird;
Bestimmen einer Anzahl von ABSs gemäß den DLL-Informationen; und
Berichten der DLL-Informationen und der Anzahl von ABSs an eine Netzentität zum Auswählen von ABS-Dichte und Reichweitenerweiterungswert für die kleine Zelle und die Makrozelle.

9. Netzkomponente nach Anspruch 8, wobei die Anweisungen, die DLL-Informationen gemäß der ersten Messung und der zweiten Messung von jedem UE, das durch die kleine Zelle versorgt wird, zu bestimmen, Anweisungen enthalten, einen DLL-Wert für jeden hypothetischen Zellenreichweitenerweiterungswert, HCRE-Wert, in einer Gruppe von Zellenreichweitenerweiterungswerten, CRE-Werten, die durch das drahtlose Netz für die kleine Zelle definiert sind, zu bestimmen.

10. Netzkomponente nach Anspruch 9, wobei die Anweisungen, die Anzahl von ABSs gemäß den DLL-Informationen zu bestimmen, Anweisungen enthalten, für jeden HCRE-Wert eine Anzahl von ABSs zu bestimmen, die dem DLL-Wert entsprechen.

11. Netzkomponente nach Anspruch 10, wobei die Anweisungen, die DLL-Informationen und die Anzahl von ABSs an die Netzkomponente zu berichten, Anweisungen enthalten, den DLL-Wert und die Anzahl von ABSs für jeden HCRE-Wert zu berichten.

12. Netzkomponente nach Anspruch 8, wobei die Programmierung ferner Anweisungen enthält, von der Netzkomponente ein ABS-Muster, das für sowohl die kleine Zelle als auch die Makrozelle optimiert ist, und eine CRE, die individuell für die kleine Zelle optimiert ist, zu empfangen, wobei das ABS-Muster einen ABS mit eingeschränktem Senden von der Makrozelle angibt und wobei das ABS-Muster und die CRE gemäß den DLL-Informationen und der Anzahl von ABSs von mehreren Zellen, die die kleine Zelle und die Makrozelle enthalten, optimiert sind.

13. Verfahren, das durch eine Netzkomponente in einer Makrozelle ausgeführt wird, um die Dichte beinahe leerer Unterrahmen, ABS-Dichte, und eine Reichweitenerweiterung für kleine Zellen in einem drahtlosen Netz zu bestimmen, wobei das Verfahren Folgendes umfasst:

Senden (320) eines ersten Pilotsignals in der Makrozelle;
Bestimmen für jede kleine Zelle von Abwärtsstreckenlast-Informationen, DLL-Informationen, gemäß einem Paar von Messungen, das von jedem Anwendergerät, UE, das durch jede kleine Zelle, die in dem drahtlosen Netz berücksichtigt wird, versorgt wird, empfangen wird, wobei das Paar von Messungen eine erste Messung des ersten Pilotsignals und eine zweite Messung eines zweiten Pilotsignals von einer kleinen Zelle enthält, wobei die kleine Zelle eine niedrigere Sendeleistung als die Makrozelle aufweist;
Bestimmen für jede kleine Zelle einer Anzahl von ABSs gemäß den DLL-Informationen; und
Berichten der DLL-Informationen und der Anzahl von ABSs für jede kleine Zelle an eine Netzentität zum Auswählen von ABS-Dichte und Reichweitenerweiterungswert für jede kleine Zelle und die Makrozelle.

14. Verfahren nach Anspruch 13, das ferner Empfangen (330) einer Funktion des Paars von Messungen von der Netzentität umfasst.

15. Verfahren nach Anspruch 13, wobei das Bestimmen der DLL-Informationen gemäß der ersten Messung und der zweiten Messung von jedem UE, das durch jede kleine Zelle versorgt wird, das Bestimmen (340) eines DLL-Werts für jeden hypothetischen Zellenreichweitenerweiterungswert, HCRE-Wert, in einer Gruppe von Zellenreichweitenerweiterungswerten, CRE-Werten, die durch das drahtlose Netz für jede kleine Zelle definiert sind, umfasst.

16. Verfahren nach Anspruch 15, wobei das Bestimmen für jede kleine Zelle der Anzahl von ABSs gemäß den DLL- Informationen das Bestimmen (350) für jeden HCRE-Wert einer Anzahl von ABSs, die dem DLL-Wert entsprechen, umfasst.

17. Verfahren nach Anspruch 16, wobei das Berichten der DLL-Informationen und der Anzahl von ABSs für jede kleine Zelle an die Netzentität das Berichten (360) des DLL-Werts und der Anzahl von ABSs für jeden HCRE-Wert umfasst.

18. Verfahren nach Anspruch 13, das ferner Empfangen von der Netzentität eines ABS-Musters, das für jede kleine Zelle und die Makrozelle optimiert ist, umfasst, wobei das ABS-Muster eine ABS mit eingeschränktem Senden von der Makrozelle angibt und wobei das ABS-Muster und die CRE für jede Zelle gemäß den DLL-Informationen und der Anzahl von ABSs von mehrere Zellen, die die kleine Zelle und die Makrozelle enthalten, optimiert sind.

19. Netzkomponente in einer Makrozelle zum Bestimmen der Dichte beinahe leerer Unterrahmen, ABS-Dichte, und des Reichweitenerweiterungswerts für kleine Zellen in einem drahtlosen Netz, wobei die Netzkomponente Folgendes umfasst:

wenigstens einen Prozessor; und
ein nichtflüchtiges computerlesbares Speichermedium, das Programmierung zum Ausführen durch den Prozessor speichert, wobei die Programmierung Anweisungen enthält zum:

Senden eines ersten Pilotsignals in der Makrozelle;
Empfangen eines Paars von Messungen von jedem Anwendergerät, UE, das durch jede kleine Zelle versorgt wird, die in dem drahtlosen Netz berücksichtigt wird, wobei das Paar von Messungen eine erste Messung des ersten Pilotsignals und eine zweite Messung eines zweiten Pilotsignals von einer kleinen Zelle enthält, wobei die kleine Zelle eine niedrigere Sendeleistung als die Makrozelle aufweist;
Bestimmen für jede kleine Zelle von Abwärtsstreckenlast-Informationen, DLL-Informationen, gemäß der ersten Messungen und der zweiten Messung von jeder UE, die durch die kleine Zelle versorgt wird;
Bestimmen für jede kleine Zelle einer Anzahl von ABSs gemäß den DLL-Informationen; und
Berichten der DLL-Informationen und der Anzahl von ABSs für jede kleine Zelle an eine Netzentität zum Auswählen von ABS-Dichte und Reichweitenerweiterungswert für jede kleine Zelle und die Makrozelle.

20. Netzkomponente nach Anspruch 19, wobei die Anweisungen, die DLL-Informationen gemäß der ersten Messung und der zweiten Messung von jedem UE, das durch jede kleine Zelle versorgt wird, zu bestimmen, Anweisungen enthalten, einen DLL-Wert für jeden hypothetischen Zellenreichweitenerweiterungswert, HCRE-Wert, in einer Gruppe von Zellenreichweitenerweiterungswerten, CRE-Werten, die durch das drahtlose Netz für jede kleine Zelle definiert sind, zu bestimmen.

21. Netzkomponente nach Anspruch 20, wobei die Anweisungen, für jede kleine Zelle die Anzahl von ABSs gemäß den DLL-Informationen zu bestimmen, Anweisungen enthalten, für jeden HCRE-Wert eine Anzahl von ABSs, die dem DLL-Wert entsprechen, zu bestimmen.

22. Netzkomponente nach Anspruch 21, wobei die Anweisungen, die DLL-Informationen und die Anzahl von ABSs für jede kleine Zelle an die Netzkomponente zu berichten, Anweisungen enthalten, den DLL-Wert und die Anzahl von ABSs für jeden HCRE-Wert zu berichten.

23. Netzkomponente nach Anspruch 19, wobei die Programmierung ferner Anweisungen enthält, von der Netzentität ein ABS-Muster zu empfangen, das für jede kleine Zelle und die Makrozelle optimiert ist, wobei das ABS-Muster eine ABS mit eingeschränktem Senden von der Makrozelle angibt und wobei das ABS-Muster und die CRE für jede kleine Zelle gemäß den DLL-Informationen und der Anzahl von ABSs, von mehrere Zellen, die die kleine Zelle und die Makrozelle enthalten, optimiert sind.

**Revendications**

1. Procédé par un composant de réseau dans une petite cellule permettant de déterminer une valeur d'extension de densité et de plage de sous-trame presque vide, ABS, pour des petites cellules dans un réseau sans fil, le procédé comprenant les étapes suivantes :

   transmettre (320) un premier signal pilote dans la petite cellule ;
   déterminer des informations de charge de liaison descendante, DLL, selon une paire de mesures reçues à partir de chaque équipement utilisateur, UE, servi par la petite cellule, la paire de mesures comportant une première mesure du premier signal pilote et une deuxième mesure d'un deuxième signal pilote provenant d'une macro cellule, la macro cellule ayant une puissance de transmission supérieure à celle de la petite cellule ;
   déterminer un nombre d'ABS selon les informations DLL ; et
   transmettre les informations DLL et le nombre d'ABS à une entité de réseau pour sélectionner une valeur d'extension de densité et de plage ABS pour la petite cellule et la macro cellule.

2. Procédé selon la revendication 1 comprenant en outre : recevoir (330) une fonction de la paire de mesures à partir de l'entité de réseau.

3. Procédé selon la revendication 1, dans lequel les informations DLL reçues à partir de chaque UE sont une fonction agrégée du DLL reçu à partir de chaque UE servi par la petite cellule.

4. Procédé selon la revendication 1 dans lequel, l'étape consistant à déterminer les informations DLL selon la première mesure et la deuxième mesure reçues à partir de chaque UE servi par la petite cellule comprend : déterminer (340) une valeur DLL pour chaque valeur d'extension de plage de cellule hypothétique, HCRE, dans un ensemble de valeurs d'extension de plage de cellule, CRE, définies par le réseau sans fil pour la petite cellule.

5. Procédé selon la revendication 4 dans lequel, l'étape consistant à déterminer le nombre d'ABS selon les informations DLL comprend : déterminer (350), pour chaque valeur HCRE, un nombre d'ABS correspondant à la valeur DLL.

6. Procédé selon la revendication 5, dans lequel l'étape consistant à transmettre les informations DLL et le nombre d'ABS à l'entité de réseau comprend : transmettre (360) la valeur DLL et le nombre d'ABS pour chaque valeur HCRE.

7. Procédé selon la revendication 1, comprenant en outre : recevoir à partir de l'entité de réseau un schéma ABS pour la petite cellule ainsi que pour la macro cellule et une valeur CRE pour la petite cellule, le schéma ABS indiquant un ABS avec une transmission restreinte de la macro cellule, et le schéma ABS et le CRE étant selon les informations DLL et le nombre d'ABS demandé par plusieurs cellules dont la petite cellule et la macro cellule.

8. Composant de réseau dans une petite cellule permettant de déterminer une valeur d'extension de densité et de plage de sous-trame presque vide, ABS, pour des petites cellules dans un réseau sans fil, le composant de réseau comprenant :

   au moins un processeur ; et
   un support de stockage non transitoire lisible par ordinateur stockant une programmation pour une exécution par le processeur, la programmation comportant des instructions destinées à :

   transmettre un premier signal pilote dans la petite cellule ;
   recevoir une paire de mesures à partir de chaque équipement utilisateur, UE, servi par la petite cellule, la paire de mesures comportant une première mesure du premier signal pilote et une deuxième mesure d'un deuxième signal pilote provenant d'une macro cellule, la macro cellule ayant une puissance de transmission supérieure à celle de la petite cellule ;
   déterminer des informations de charge de liaison descendante, DLL, selon la première mesure et la deuxième mesure reçues à partir de chaque UE servi par la petite cellule ;
   déterminer un nombre d'ABS selon les informations DLL ; et
   transmettre les informations DLL et le nombre d'ABS à une entité de réseau pour sélectionner une valeur d'extension de densité et de plage ABS pour la petite cellule et la macro cellule.

9. Composant de réseau selon la revendication 8, dans lequel les instructions destinées à déterminer les informations DLL selon la première mesure et la deuxième mesure reçues à partir de chaque UE servi par la petite cellule comportent des instructions permettant de déterminer une valeur DLL pour chaque valeur d'extension de plage de cellule hypothétique, HCRE, dans un ensemble de valeurs d'extension de plage de cellule, CRE, définies par le réseau sans fil pour la petite cellule.

10. Composant de réseau selon la revendication 9, dans lequel les instructions destinées à déterminer le nombre d'ABS selon les informations DLL comportent des instructions permettant de déterminer, pour chaque valeur HCRE, un nombre d'ABS correspondant à la valeur DLL.

11. Composant de réseau selon la revendication 10, dans lequel les instructions destinées à transmettre les informations DLL et le nombre d'ABS à l'entité de réseau comportent des instructions permettant de transmettre la valeur DLL et le nombre d'ABS pour chaque valeur HCRE.

12. Composant de réseau selon la revendication 8, dans lequel la programmation comporte d'autres instructions destinées à recevoir à partir de l'entité de réseau un schéma ABS optimisé pour la petite cellule ainsi que pour la macro cellule et un CRE optimisé individuellement pour la petite cellule, le schéma ABS indiquant un ABS avec une transmission restreinte de la macro cellule, et le schéma ABS et le CRE étant optimisés selon les informations DLL et le nombre d'ABS de plusieurs cellules dont la petite cellule et la macro cellule.

13. Procédé par un composant de réseau dans une macro cellule permettant de déterminer une extension de densité et de plage de sous-trame presque vide, ABS, pour des petites cellules dans un réseau sans fil, le procédé comprenant :

transmettre (320) un premier signal pilote dans la macro cellule ;
déterminer, pour chaque petite cellule, des informations de charge de liaison descendante, DLL, selon une paire de mesures reçues à partir de chaque équipement utilisateur, UE, servi par chaque petite cellule considérée dans le réseau sans fil, la paire de mesures comportant une première mesure du premier signal pilote et une deuxième mesure d'un deuxième signal pilote provenant d'une petite cellule, la petite cellule ayant une puissance de transmission inférieure à celle de la macro cellule ;
déterminer, pour chaque petite cellule, un nombre d'ABS selon les informations DLL ; et
transmettre les informations DLL et le nombre d'ABS pour chaque petite cellule à une entité de réseau pour sélectionner une valeur d'extension de densité et de plage ABS pour chaque petite cellule et la macro cellule.

14. Procédé selon la revendication 13, comprenant en outre : recevoir (330) une fonction de la paire de mesures à partir de l'entité de réseau.

15. Procédé selon la revendication 13, dans lequel l'étape consistant à déterminer les informations DLL selon la première mesure et la deuxième mesure reçues à partir de chaque UE servi par chaque petite cellule comprend : déterminer (340) une valeur DLL pour chaque valeur d'extension de plage de cellule hypothétique, HCRE, dans un ensemble de valeurs d'extension de plage de cellule, CRE, définies par le réseau sans fil pour chaque petite cellule.

16. Procédé selon la revendication 15, dans lequel l'étape consistant à déterminer, pour chaque petite cellule, le nombre d'ABS selon les informations DLL comprend : déterminer (350), pour chaque valeur HCRE, un nombre d'ABS correspondant à la valeur DLL.

17. Procédé selon la revendication 16, dans lequel l'étape consistant à transmettre les informations DLL et le nombre d'ABS pour chaque petite cellule à l'entité de réseau comprend : transmettre (360) la valeur DLL et le nombre d'ABS pour chaque valeur HCRE.

18. Procédé selon la revendication 13 comprenant en outre : recevoir à partir de l'entité de réseau un schéma ABS optimisé pour chaque petite cellule et la macro cellule, le schéma ABS indiquant un ABS avec une transmission restreinte de la macro cellule, et le schéma ABS et un CRE pour chaque cellule étant optimisés selon les informations DLL et le nombre d'ABS de plusieurs cellules dont la petite cellule et la macro cellule.

19. Composant de réseau dans une macro cellule permettant de déterminer une valeur d'extension de densité et de plage de sous-trame presque vide, ABS, pour des petites cellules dans un réseau sans fil, le composant de réseau comprenant :

au moins un processeur ; et

un support de stockage non transitoire lisible par ordinateur stockant une programmation pour une exécution par le processeur, la programmation comportant des instructions destinées à :

transmettre un premier signal pilote dans la macro cellule ;

recevoir une paire de mesures à partir de chaque équipement utilisateur, UE, servi par chaque petite cellule considérée dans le réseau sans fil, la paire de mesures comportant une première mesure du premier signal pilote et une deuxième mesure d'un deuxième signal pilote provenant d'une petite cellule, la petite cellule ayant une puissance de transmission inférieure à celle de la macro cellule ;

déterminer, pour chaque petite cellule, des informations de charge de liaison descendante, DLL, selon la première mesure et la deuxième mesure reçues à partir de chaque UE servi par la petite cellule ;

déterminer, pour chaque petite cellule, un nombre d'ABS selon les informations DLL ; et

transmettre les informations DLL et le nombre d'ABS pour chaque petite cellule à une entité de réseau pour sélectionner une valeur d'extension de densité et de plage ABS pour chaque petite cellule et la macro cellule.

20. Composant de réseau selon la revendication 19, dans lequel les instructions destinées à déterminer les informations DLL selon la première mesure et la deuxième mesure reçues à partir de chaque UE servi par chaque petite cellule comportent des instructions permettant de déterminer une valeur DLL pour chaque valeur d'extension de plage de cellule hypothétique, HCRE, dans un ensemble de valeurs d'extension de plage de cellule, CRE, définies par le réseau sans fil pour chaque petite cellule.

21. Composant de réseau selon la revendication 20, dans lequel les instructions destinées à déterminer, pour chaque petite cellule, le nombre d'ABS selon les informations DLL comportent des instructions permettant de déterminer, pour chaque valeur HCRE, un nombre d'ABS correspondant à la valeur DLL.

22. Composant de réseau selon la revendication 21, dans lequel les instructions destinées à transmettre les informations DLL et le nombre d'ABS pour chaque petite cellule à l'entité de réseau comportent des instructions permettant de transmettre la valeur DLL et le nombre d'ABS pour chaque valeur HCRE.

23. Composant de réseau selon la revendication 19, dans lequel la programmation comporte en outre des instructions destinées à recevoir à partir de l'entité de réseau un schéma ABS optimisé pour chaque petite cellule et la macro cellule, le schéma ABS indiquant un ABS avec une transmission restreinte de la macro cellule, et le schéma ABS et un CRE pour chaque petite cellule étant optimisés selon les informations DLL et le nombre d'ABS de plusieurs cellules dont la petite cellule et la macro cellule.

FIG. 1

FIG. 2

300

310

The RNC (or a designated network entity for ABS density and RE optimization) triggers, e.g., RRC signaling, measurements at the UEs for the purpose of determining ABS density CREs

320

The small cell (or macro cell) transmits a pilot signal (e.g., a CPICH) with a defined power for this measurement purpose

330

The cell receives a MP from each of its UEs

340

The cell determines a DLL that aggregates the loads of the UEs according to the MPs form the UEs for each HCRE in its CRE set

350

The cell determines a recommended number of ABSs for each HCRE according to the determined DLL

360

The cell reports to the RNC (or a designated network entity) the determined DLL and recommended number of ABSs for each HCRE

370

The RNC (or designated entity) determines a suitable ABS density for all the cells and a CRE for each cell according to the combination of reports form the cells

FIG. 3

400

401

CPU
410

Mass 430
Storage

Network
Interface

450

Memory
420

Video 440
Adapter

I/O 490
Interface

Network

480

Display
460

Mouse/
Keyboard/
Printer
470

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Further considerations on enhancement of ABS resource status. **RENESAS MOBILE EUROPE LTD.** 3GPP DRAFT; R1-123577, 3RD GENERATION PARTNERSHIP PROJECT (3GPP). MOBILE COMPETENCE CENTRE, 05 August 2012